# DEMANDE DE BREVET EUROPEEN

(11) **EP 0 612 949 A1**
(43) Date de publication de la demande: **31.08.1994**
(21) Numéro de dépôt: 94400407.6
(22) Date de dépôt: 25.02.1994
(51) Int. Cl.: F16L 33/02

(54) **Collier de serrage à ressort avec sécurité améliorée**

(30) Priorité: 26.02.1993 FR 9302261
(71) Demandeur: Etablissements CAILLAU, F-92130 Issy-les-Moulineaux (FR)
(72) Inventeur: Calmettes, Lionel, F-41200 Romorantin Lanthenay (FR); Detable, Pascal, F-41130 Villedieu (FR)
(74) Mandataire: Descourtieux, Philippe

(57) **Abrégé**

Collier de serrage à ressort constitué par une bande de métal ***(1)*** enroulée sur elle-même, les portions terminales ***(1******a******-1******b******)*** de ladite bande ayant chacune une largeur sensiblement égale à la moitié de la largeur de la bande, étant disposées l'une à côté de l'autre et étant pourvues de pattes ***(2-3)****,* dirigées radialement vers l'extérieur du collier, formant butées d'appui pour un outil du genre pince. Chaque patte, s'étendant sensiblement sur toute la largeur de la bande, possède, du côté opposé à son raccordement à la portion terminale correspondante de la bande, un prolongement ***(2******a******-3******a******)*** qui s'étend sur l'autre portion terminale de la bande, dans la direction opposée à celle de la patte portée par cette autre portion terminale.

## Description

On connaît déjà notamment par le brevet EP-A-443 681 des colliers de serrage d'un tuyau souple sur un tube rigide, généralement dénommés *"colliers à ressort".* De tels colliers sont essentiellement constitués par une bande métallique enroulée sur elle-même, les portions terminales de la bande ayant une largeur sensiblement égale à la moitié de celle de la bande, et étant disposées l'une à côté de l'autre. Chaque portion terminale est d'autre part pourvue d'une patte, dirigée radialement vers l'extérieur du collier et constituant une butée pour les mâchoires d'un outil du genre pince.

Le métal utilisé est choisi ou convenablement traité pour présenter non seulement une bonne résistance à la flexion mais surtout une rigidité appropriée à son usage. En effet, la mise en place d'un tel collier est obtenue en rapprochant les butées précitées l'une de l'autre au moyen d'un outil de serrage du genre pince. Le diamètre du collier se trouve ainsi augmenté, ce qui permet de l'engager facilement, par coulissement axial, sur le tuyau ou l'objet à serrer. La cessation de l'effort de rapprochement des butées libère l'énergie accumulée dans le collier qui vient alors lui-même serrer le tuyau en tentant de reprendre son diamètre initial.

On a déjà proposé, notamment par le brevet DE-A-3 043 108, de découper la bande de telle façon que les pattes s'étendent sur toute la largeur de la bande, ce qui permet une meilleure utilisation d'un outil de serrage du type *"pince plate"* ou "*pince universelle".* Toutefois, dans un grand nombre de cas, il est préféré l'utilisation d'un outil de serrage dit *"pince à bec"* en raison de sa précision d'accrochage sur les butées de préhension d'un collier. Mais, jusqu'à présent, les colliers à ressort du type rappelé plus haut ne permettent pas d'utiliser une *"pince à bec"* pour leur mise en place.

La présente invention a donc pour objet un collier de serrage à ressort dont les pattes de préhension peuvent être saisies par une *"pince à bec",* et ce d'une façon tout à fait sûre, c'est-à-dire évitant les fausses manoeuvres pendant la mise en place du collier sur l'objet à serrer.

Selon l'invention, chaque patte, s'étendant sensiblement sur toute la largeur de la bande, possède, du côté opposé à son raccordement à la portion terminale correspondante de la bande, un prolongement qui s'étend sur l'autre portion terminale de la bande, dans la direction opposée à la patte portée par cette autre portion terminale.

L'invention sera mieux comprise et ses caractéristiques ainsi que ses avantages apparaîtront au cours de la description qui va suivre, en référence au dessin annexé dans lequel:
· La figure 1 est une vue en perspective d'un collier selon l'invention,
· La figure 2 est une section **II-II** de la figure 1, dans le cas d'une variante de réalisation visible sur la partie droite de la figure.

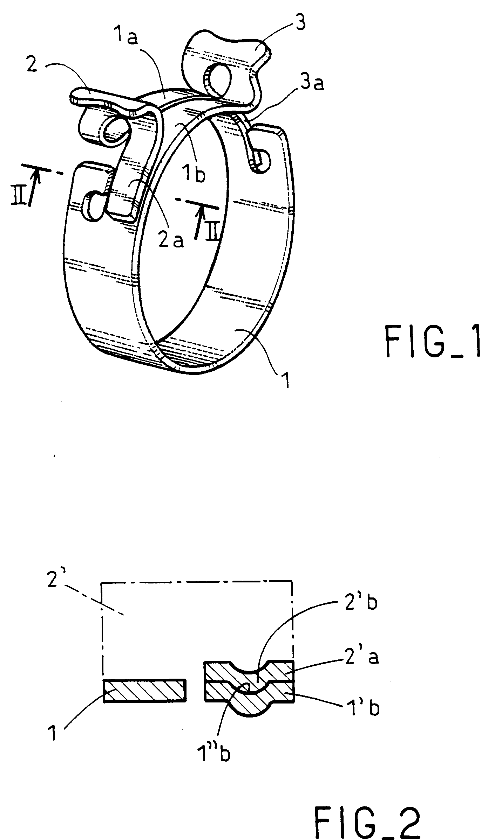

Si l'on se reporte tout d'abord à la figure 1, on voit un collier à ressort constitué par une bande métallique ***1*** enroulée sur elle-même. Ses portions terminales ***1******a*** et ***1******b*** présentent chacune une largeur sensiblement égale à la moitié de celle de la bande et sont pourvues de pattes ***2*** et ***3***, faisant saillie radialement vers l'extérieur du collier. Ainsi qu'on le sait, les pattes ***2*** et ***3*** constituent des butées d'appui pour un outil, du genre pince, permettant, par rapprochement desdites pattes, d'augmenter le diamètre du collier pour l'enfiler axialement sur un objet allongé, notamment sur un tuyau souple emmanché sur un tube rigide. Le relâchement de l'effort sur les pattes ***2*** et ***3*** provoque le serrage du collier grâce à l'énergie accumulée dans le ressort constitué par la bande ***1*** elle-même.

La patte ***2***, liée à la portion terminale ***1******a****,* s'étend sensiblement sur toute la largeur de la bande ***1*** et possède un prolongement ***2******a*** qui s'étend sur la portion terminale ***1******b*** et éventuellement sur la bande ***1*** elle-même dans la direction opposée à la patte ***3***.

Une disposition symétrique de celle qui vient d'être décrite est bien évidemment prévue pour la patte ***3***.

Ainsi qu'on l'expliquera plus loin, ces dispositions facilitent l'accrochage des pattes par un outil du type *"pince à bec*".

De plus, ainsi qu'on le voit bien sur la figure 1, chaque patte ***2-3*** présente avantageusement une forme sensiblement semi-cylindrique et les convexités des deux pattes sont situées en regard l'une de l'autre. Grâce à cette disposition complémentaire, les pattes forment une espèce de logement pour les becs d'un outil, ce qui contribue à nouveau à leur accrochage sûr par cet outil.

Si l'on se reporte maintenant à la figure 2, plus particulièrement à la partie droite de cette figure, on voit, dans le cas d'une variante avantageuse de réalisation, que le prolongement ***2'******a*** de la patte ***2'***, représentée schématiquement et de structure analogue à celle de la patte ***2*** précédemment décrite, présente un embouti qui constitue une protubérance ***2'******b*** faisant saillie vers l'intérieur du collier. La portion terminale ***1'******b*** présente elle-même, sur une longueur appropriée, une rainure ***1*''*****b*** faisant également saillie vers l'intérieur du collier, ladite rainure pouvant également se prolonger quelque peu dans la portion courante de la bande ***1****.*

Bien évidemment, une disposition symétrique de celle qui vient d'être décrite sera également prévue sur le prolongement ***3******a*** de la patte ***3*** portée par la portion terminale ***1******b*** de la bande ***1***.

La mise en place d'un collier à ressort selon l'invention s'effectue de la façon connue, les becs d'une *"pince à bec"* prenant place de façon sûre dans les logements formés par les pattes. Mais surtout la présence des prolongements des pattes ***2-3*** empêche les becs de glisser sous les pattes et de risquer, si l'outil n'est pas présenté de façon absolument correcte, une mauvaise préhension des pattes au moment de leur rapprochement par l'outil, voire même une déformation anormale des pattes ou de leur zone de raccordement à la portion terminale ***1******a****,* ***1******b*** qui les porte.

D'autre part, dans le cas de la variante réprésentée sur la figure 2, les prolongements des pattes se trouvent guidés par la coopération des emboutis et des rainures correspondantes, ce qui évite à nouveau toute déformation anormale du collier au moment de sa mise en place et contribue à assurer le serrage dans les conditions prévues.

Enfin il faut souligner que les dispositions du collier qui viennent d'être décrites seront avantageusement utilisées sur les colliers faisant l'objet de la demande de brevet déposée ce jour par la demanderesse et ayant pour titre *"collier de serrage à ressort".*

## Revendications

1. Collier de serrage à ressort constitué par une bande de métal (***1***) enroulée sur elle-même, les portions terminales (***1******a******-1******b***) de ladite bande ayant chacune une largeur sensiblement égale à la moitié de la largeur de la bande, étant disposées l'une à côté de l'autre et étant pourvues de pattes (***2-3***), dirigées radialement vers l'extérieur du collier, formant butées d'appui pour un outil du genre pince, caractérisé en ce que chaque patte, s'étendant sensiblement sur toute la largeur de la bande, possède, du côté opposé à son raccordement à la portion terminale correspondante de la bande, un prolongement (***2******a******-3******a***) qui s'étend sur l'autre portion terminale de la bande, dans la direction opposée à celle de la patte portée par cette autre portion terminale.

2. Collier de serrage selon la revendication 1, caractérisé en ce que chaque patte (***2-3***) présente une forme sensiblement semi-cylindrique, la convexité d'une patte étant dirigée vers l'autre patte.

3. Collier de serrage selon l'une quelconque des revendications précédentes, caractérisé en ce que la surface extérieure de la bande présente, au moins au voisinage de chacune de ses portions terminales, une rainure *(****1''******b***) s'étendant dans le sens périphérique, constituant un organe de guidage pour une protubérance (***2'******b***) dirigée vers l'intérieur du collier et située sur le prolongement (***2*'*****a***) correspondant d'une patte (***2'***).
